# FASCICULE DE BREVET EUROPEEN

(11) **EP 2 465 631 B1**
(45) Date de publication et mention de la délivrance du brevet: **21.09.2016**
(21) Numéro de dépôt: 11193815.5
(22) Date de dépôt: 15.12.2011
(51) Int. Cl.: B23K 11/00, B23K 11/02, B23K 11/30

(54) **Procédé de mise en place d'un dispositif de soudage en phase solide par résistance**
Umsetzungsverfahren für eine Vorrichtung zum Widerstandsschweißen in der Festphase
Implementation method for a device for solid-phase resistance welding

(30) Priorité: 15.12.2010 FR 1060556
(43) Date de publication de la demande: 20.06.2012
(73) Titulaire: Commissariat à l'Énergie Atomique et aux Énergies Alternatives, 75015 Paris (FR)
(72) Inventeur: Monnier, Arnaud, 92100 Boulogne (FR); Corpace, Fabien, 92130 Issy les Moulineaux (FR)
(74) Mandataire: Regimbeau

(56) Documents cités:
- JP-A- 11 151 578

## Description

La présente invention concerne un procédé de mise en place d'un dispositif de soudage par résistance en phase solide, adapté pour souder une première pièce à une deuxième pièce, comportant deux électrodes cylindriques, adaptées chacune pour entourer une pièce à souder et permettre le passage d'un courant de soudage à travers la première pièce et la deuxième pièce, chacune des deux électrodes comportant au moins une fente longitudinale définissant un espace circonférentiel d'ajustage, permettant un ajustage par serrage de chacune des électrodes autour d'une pièce à souder.

### ETAT DE L'ART

Certains matériaux présentent une soudabilité médiocre par les procédés conventionnels de soudage par fusion. Le passage par la phase liquide pour réaliser le soudage modifie en effet drastiquement la microstructure initiale du matériau, et induit une dégradation des propriétés mécaniques. C'est le cas notamment pour les aciers connus renforcés par dispersion d' oxydes, ou « Oxide Dispersion Strengthened » (ODS) en anglais.

Il est donc nécessaire de les souder en phase solide, pour garder les propriétés mécaniques initiales : un soudage en phase solide permet en effet le soudage de deux pièces métalliques mises en contact, sans fondre le métal ni ajouter de métal d'apport fondu, en minimisant la température atteinte durant l'opération de soudage ou en limitant le passage en phase fondue à une zone restreinte au niveau du contact entre les pièces à souder.

Une technique connue de soudage en phase solide est le soudage par résistance (voir le document JP-A-11151578).

Le soudage par résistance utilise comme moyen de chauffage l'effet Joule produit par le passage d'un courant de forte intensité (le courant de soudage peut aller jusqu'à des valeurs de 15 kA) à travers une première pièce à souder en contact avec une deuxième pièce à souder. Des électrodes, généralement en alliage de cuivre (préférentiellement du CuCrZr), permettent d'une part l'accostage (c'est-à-dire la mise en contact et le maintien) des pièces à souder et d'autre part l'amenée du courant de soudage.

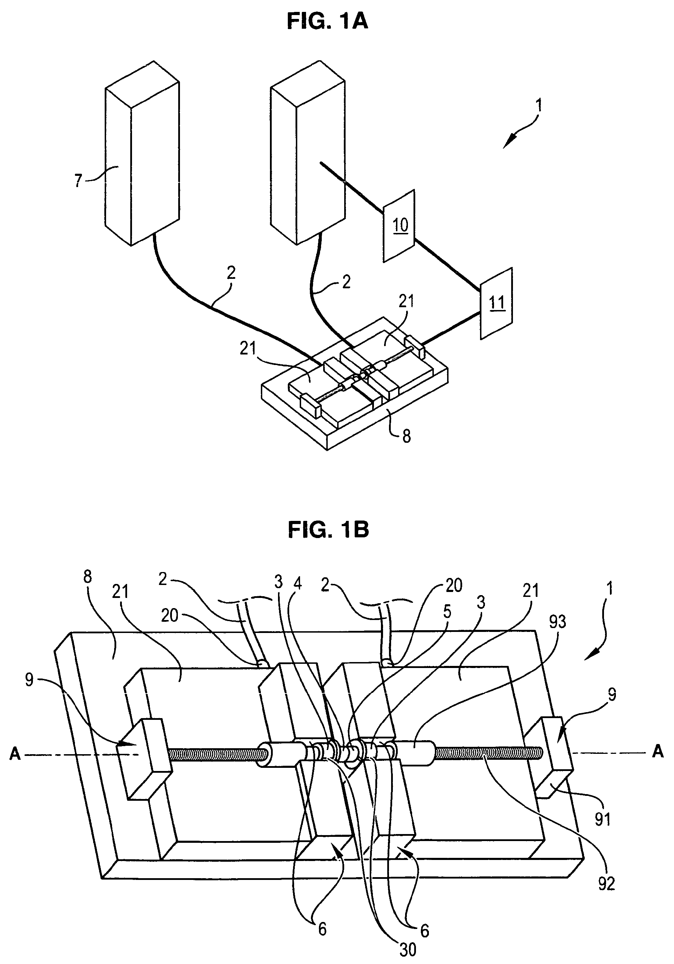

Les figures 1A et 1B montrent schématiquement un dispositif 1 connu de soudage en phase solide par résistance, adapté pour souder une première pièce 4 à une deuxième pièce 5.

Le dispositif 1 comporte classiquement des transformateurs 7 électriques, reliés à deux amenées 2 de courant.

Chaque amenée 2 est reliée à un bloc 21 conducteur de courant (généralement en laiton), via une fiche 20.

Les blocs 21 sont posés sur une platine 8 de support.

Le dispositif 1 comporte en outre deux électrodes 3 cylindriques, chacune en contact électrique avec un bloc 21, et en outre adaptées chacune pour entourer une pièce 4 ou 5 à souder, et permettre le passage d'un courant de soudure à travers la première pièce 4 et la deuxième pièce 5.

Le dispositif 1 comporte également une commande 10 de soudage, reliée d'une part aux transformateurs 7 et d'autre part à un groupe 11 de refroidissement du dispositif.

La section droite des électrodes 3 dépend de la section droite des pièces 4 et 5 à souder, et les électrodes 3 peuvent être par exemple de section droite circulaire ou carrée.

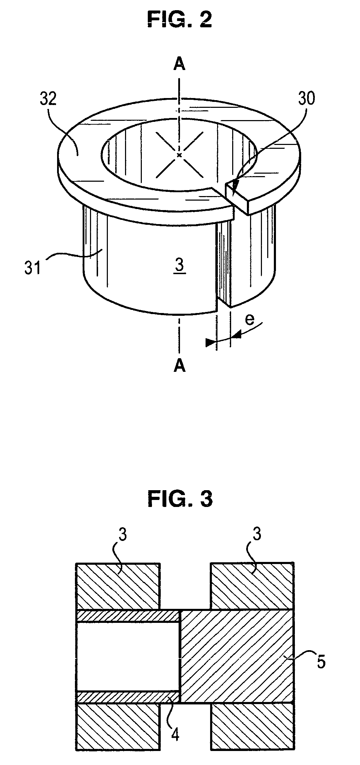

Comme le montre la figure 2, chacune des deux électrodes 3 comporte en général un fût cylindrique creux 31, une collerette 32 externe venue de matière sur le fût 31 et perpendiculaire au fût 31, et au moins une fente 30 longitudinale, c'est-à-dire s'étendant principalement parallèlement à un axe AA longitudinal de chaque électrode 3.

Chaque fente 30 définit un espace e circonférentiel d'ajustage, permettant un ajustage par serrage de chacune des électrodes 3 autour d'une pièce 4 ou 5 à souder. L'ajustage permet un bon contact surfacique entre l'électrode 3 et chaque pièce 4 ou 5, pour une bonne répartition circonférentielle et longitudinale, électrique et thermique, entre les électrodes 3 d'une part et les pièces 4 et 5 d'autre part.

Pour permettre l'ajustage, les blocs 21 comportent des moyens 6 de serrage des électrodes 3, coopérant avec le fût 31.

Les moyens 6 de serrage serrent les électrodes circonférentiellement autour des pièces 4 et 5.

Les blocs 21 peuvent également comporter des moyens 9 de fixation longitudinaux coopérant avec chaque électrode 3 du côté opposé à la collerette 32.

Les moyens 9 de fixation comportent en général une tige 92 filetée s'étendant parallèlement à l'axe A-A des électrodes 3 et coopérant d'une part avec un écrou 93 de réglage de la position des électrodes 3, chaque écrou 93 étant en contact avec une électrode 3, et d'autre part une butée 91 de référence sur la platine 8.

En général, l'espace e, une fois les électrodes 3 ajustées sur les pièces 4 ou 5 comme le montrent les figures 1B et 3, est strictement supérieur à 1 mm, et les fentes 30 sont sensiblement alignées longitudinalement entre elles, pour permettre un contrôle visuel des fentes 30 et de l'ajustage.

Le dispositif connu des figures 1A, 1B, 2 et 3 présente cependant des inconvénients.

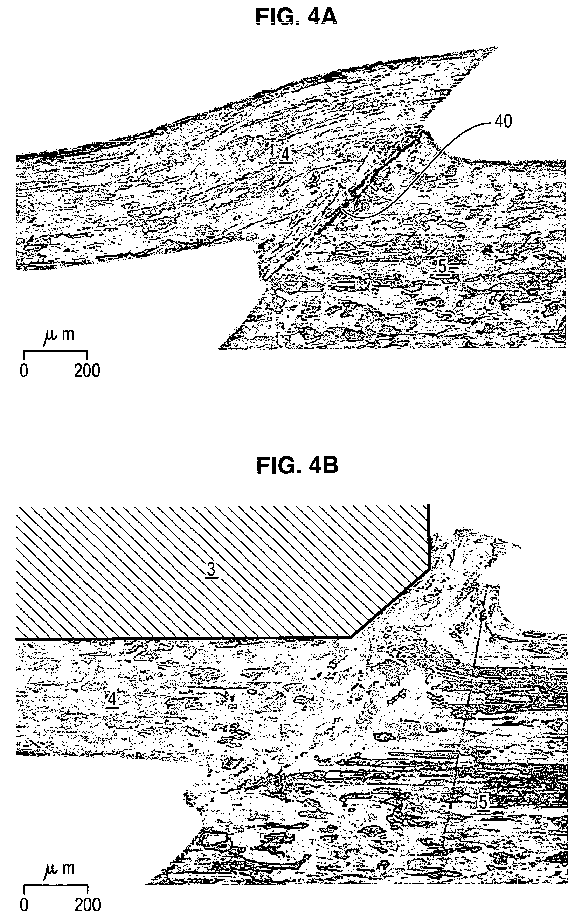

Comme le montre la figure 4A, il a été observé des défauts 40 de soudage des pièces 4 et 5 au niveau des fentes 30 du dispositif connu.

Ces défauts peuvent être de types morphologiques, métallurgiques, ou mécaniques. La soudure n'est par conséquent pas homogène, et les défauts apparus sont des points privilégiés de fragilité de la soudure.

### PRESENTATION DE L'INVENTION

L'invention propose de pallier au moins un de ces inconvénients.

À cet effet, l'invention propose un procédé de mise en place d'un dispositif de soudage en phase solide par résistance selon la revendication 1, ou selon l'alternative de la revendication 2.

D'autres caractéristiques optionnelles et non limitatives prises seules ou en combinaison sont présentées dans les revendications suivantes.

L'invention est avantageusement complétée par les caractéristiques suivantes, prises seules ou en une quelconque de leur combinaison techniquement possible :
- une fois une électrode ajustée autour de la première pièce et une électrode ajustée autour de la deuxième pièce, chaque fente a un espace circonférentiel strictement inférieur à 0,5mm, préférentiellement strictement inférieur à 0,3mm ;

L'invention présente de nombreux avantages.

Elle permet un soudage en phase solide par résistance, tout en permettant d'éliminer les défauts de types morphologiques, métallurgiques, ou mécaniques.

La soudure obtenue par l'invention est homogène, même au niveau des fentes des électrodes, sans point privilégié de fragilité de la soudure, comme le montre la figure 4B.

La mise en oeuvre de l'invention est simple.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- les figures 1A et 1B, déjà commentées, représentent schématiquement un dispositif connu de soudage en phase solide par résistance ;
- la figure 2 déjà commentée, représente schématiquement une électrode connue ;
- la figure 3, déjà commentée, représente schématiquement une vue en coupe d'une électrode ajustée autour de la première pièce et une électrode ajustée autour de la deuxième pièce ;
- la figure 4A, déjà commentée, représente schématiquement un défaut de soudure dans un dispositif selon l'art antérieur, notamment au niveau des fentes des électrodes, et la figure 4B, déjà commentée également, représente schématiquement un soudage homogène dans un dispositif selon l'invention, même au niveau des fentes des électrodes ;
- la figure 5 représente schématiquement un mode de réalisation possible de la mise en place d'un dispositif de soudage en phase solide par résistance, selon l'invention;
- la figure 6 représente schématiquement un mode de réalisation possible d'une électrode selon l'invention ;
- la figure 7 représente schématiquement une vue en coupe d'une électrode ajustée autour de la deuxième pièce, par des moyens de serrage selon l'invention ;
- les figures 8A et 8B représentent schématiquement la disposition relative d'une fente de deux électrodes selon l'invention ;
- les figures 9A et 9B représentent schématiquement la disposition relative des deux fentes de deux électrodes selon l'invention ;
- la figure 10 représente schématiquement les paramètres d'une modélisation possible d'un dispositif selon l'invention ;
- la figure 11 représente l'influence de l'angle θ entre les fentes des électrodes d'un dispositif sur la densité de courant de soudage, dans un modèle selon la figure 10 ; et
- la figure 12 représente l'influence de la taille des fentes des électrodes d'un dispositif sur la valeur de la chute de la densité de courant de soudage, dans un modèle selon la figure 10.

Sur l'ensemble des figures, les éléments similaires portent des références numériques identiques.

### DESCRIPTION DETAILLEE

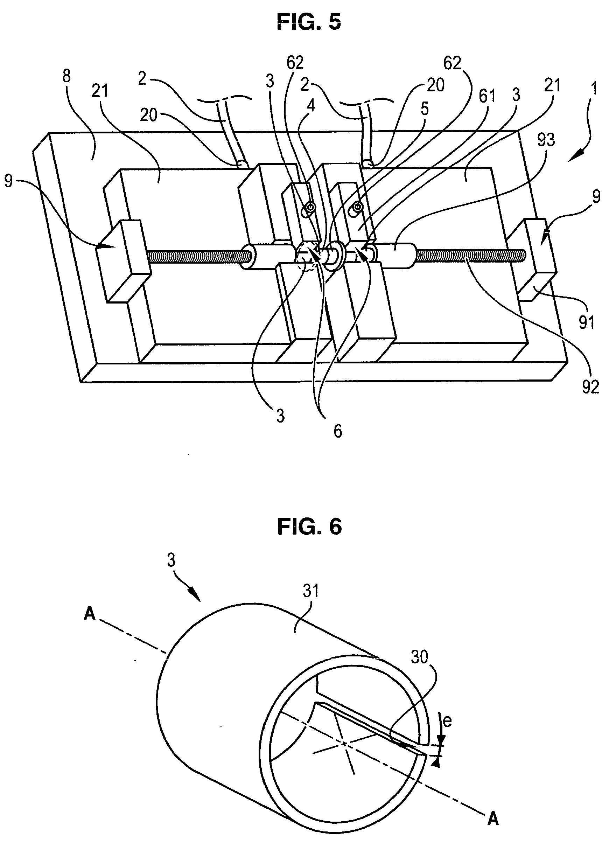

La figure 5 représente schématiquement un mode de réalisation possible de la mise en place d'un dispositif 1 de soudage en phase solide par résistance, selon l'invention.

Comme on peut le constater sur la figure 5, le dispositif 1 reprend un certain nombre d'éléments identiques à ceux décrits en référence à la figure 1 illustrant l'art antérieur, et la description de ces éléments n'est pas reprise en détail dans les développements qui suivent, pour des raisons évidentes de concision. On se référera donc avantageusement à la description de ces éléments en référence à la figure 1.

Le dispositif 1 comporte principalement deux électrodes 3 cylindriques, adaptées chacune pour entourer une pièce 4 ou 5 à souder et permettre le passage d'un courant de soudage à travers la première pièce 4 et la deuxième pièce 5.

La section droite des électrodes 3 dépend de la section droite des pièces 4 et 5 à souder, et les électrodes 3 peuvent être par exemple de section droite circulaire ou carrée.

Comme le montre la figure 6, chacune des deux électrodes 3 comporte en général un fût cylindrique creux 31. Chaque électrode 3 peut comporter une collerette externe (comme représentée par exemple sous la référence 32 sur la figure 2) venue de matière sur le fût 31, et perpendiculaire au fût 31.

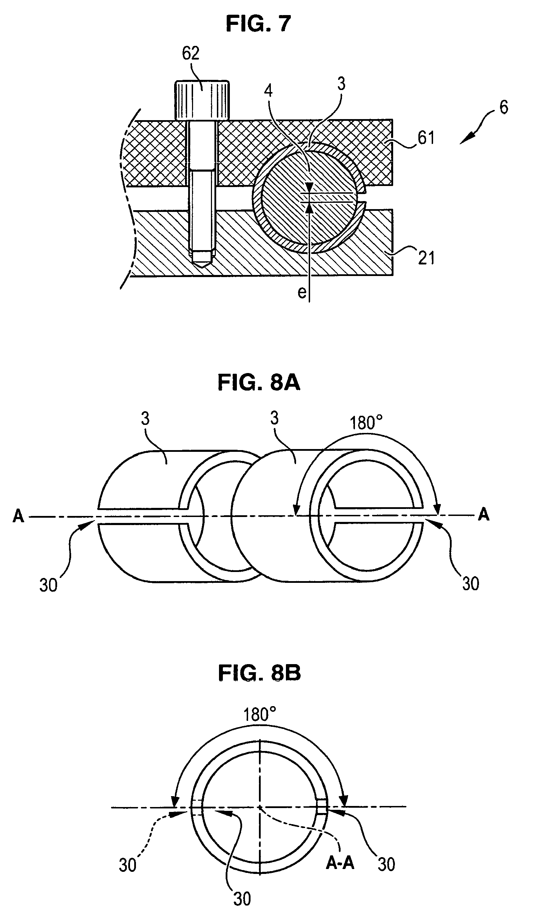

Chacune des deux électrodes 3 comporte au moins une fente 30 longitudinale, c'est-à-dire s'étendant principalement parallèlement à un axe AA longitudinal de chaque électrode 3, définissant un espace e circonférentiel d'ajustage, permettant un ajustage par serrage de chacune des électrodes 3 autour d'une pièce 4 ou 5 à souder. L'ajustage permet un bon contact surfacique entre l'électrode 3 et chaque pièce 4 ou 5, pour une bonne répartition circonférentielle et longitudinale, électrique et thermique, entre les électrodes 3 d'une part et les pièces 4 et 5 d'autre part. Comme le montre la figure 7, l'espace e de la fente 30 est mesuré au niveau de la surface intérieure des électrodes 3.

Le dispositif 1 comporte à cet effet deux moyens 6 de serrage des électrodes 3 autour de la première pièce 4 et de la deuxième pièce 5. Les moyens 6 sont conducteurs du courant, et sont préférentiellement en laiton.

Comme le montre la figure 5, et plus en détail la figure 7, les moyens 6 comportent avantageusement chacun
- un bras 61, adapté, par complémentarité de forme, à coopérer avec une électrode 3 placée sur un bloc 21, et
- une vis 62 d'ajustage coopérant d'une part avec le bras 61 et d'autre part avec le bloc 21, et permettant de serrer et d'ajuster l'électrode 3 autour d'une pièce à souder, par exemple la pièce 4 sur la figure 7.

De plus, les moyens 6 sont adaptés pour que, une fois une électrode 3 ajustée autour de la première pièce 4 et une électrode 3 ajustée autour de la deuxième pièce 5, chaque fente 30 soit la plus éloignée, angulairement, d'une autre fente 30. L'angle entre les fentes des électrodes est compté dans un plan perpendiculaire à l'axe A-A.

Comme le montrent les figures 8A et 8B, dans le cas où chacune des deux électrodes 3 comporte une fente 30, chaque fente 30 est éloignée de 180° d'une autre fente 30.

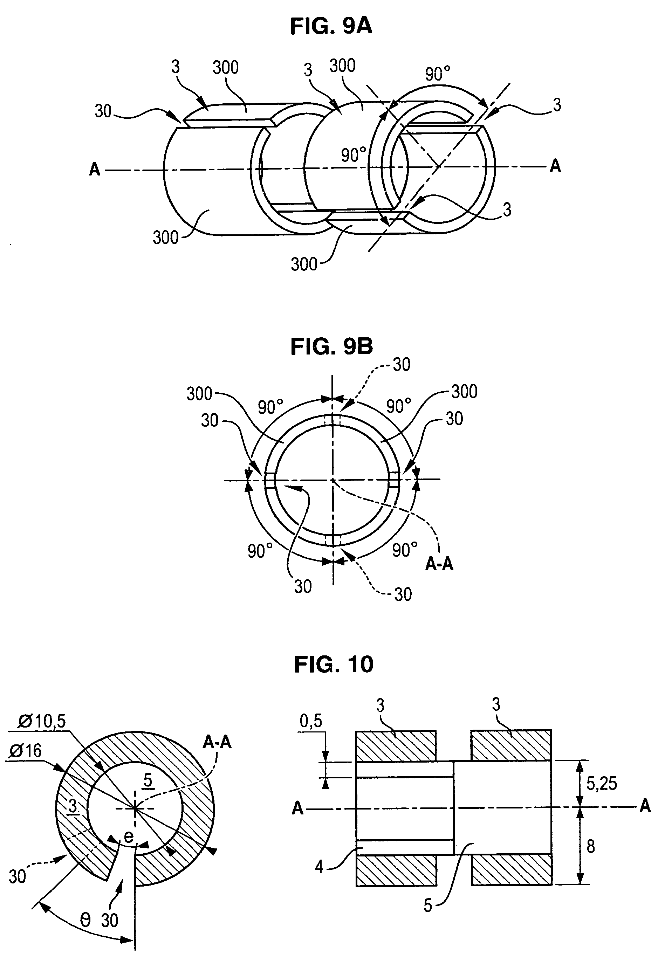

Comme le montrent les figures 9A et 9B, dans le cas où chacune des deux électrodes 3 comporte deux fentes 30 diamétralement opposées (chaque électrode 3 est ainsi formée de deux demi coquilles 300), chaque fente 30 est éloignée angulairement de 90° d'une autre fente 30 d'une autre électrode 3.

En effet, comme le montre la figure 10, un modèle de la géométrie pièce 4-pièce 5 ainsi que des électrodes 3 servant au serrage des pièces 4 et 5 et au passage du courant a été développé, pour permettre
- une simulation électrostatique par éléments finis, afin d'évaluer l'influence des fentes sur la répartition de la densité de courant dans les pièces 4 et 5 à souder ; et
- une simulation électrothermique par éléments finis, afin de quantifier l'influence des fentes sur les températures atteintes dans les pièces 4 et 5 à souder.

Pour ce modèle, les électrodes 3 sont représentées par des tubes de diamètre intérieur 10.5mm et de diamètre extérieur 16mm, fendus par une fente 30. La pièce 4 est par exemple une gaine creuse d'épaisseur de paroi comprise entre 0,5mm et 1mm. La pièce 5 est par exemple un tube plein avec un diamètre extérieur compris entre 10,5mm et 31mm.

Pour ce modèle, un maillage des électrodes, de la pièce 4 et de la pièce 5, connu de l'homme du métier, est réalisé. Le maillage est par exemple réalisé à l'aide d'éléments parallélépipédiques à huit noeuds. Les interfaces entre les pièces 4 et 5, ainsi qu'entre les pièces 4 et 5 et les électrodes 3 sont réalisées par une continuité du maillage.

Les fentes 30 de chaque électrode 3 sont déphasées angulairement par un angle θ, comme représentée sur la figure 10. Différentes valeurs de θ ont ainsi été envisagées.

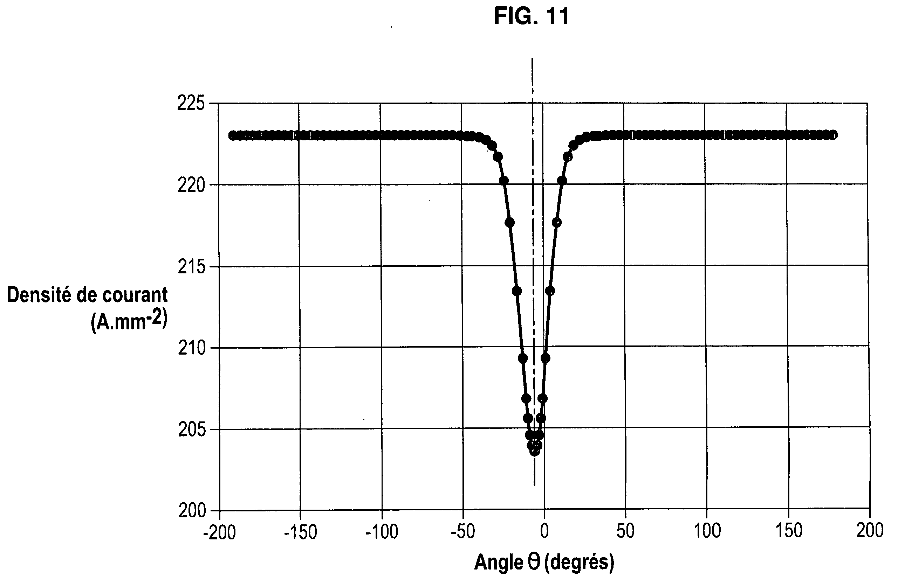

La figure 11 montre que les simulations indiquent que lorsque θ est nul, la densité de courant de soudage dans les pièces 4 et 5 chute, ce qui induit des défauts dans le soudage.

L'angle θ optimal, dans le cas où chacune des deux électrodes 3 comporte une fente 30, est de 180° entre chaque fente 30. L'angle θ optimal, dans le cas où chacune des deux électrodes 3 comporte deux fentes 30, est de 90° entre chaque fente d'une autre électrode 3. Ces résultats ont été vérifiés dans la pratique.

En outre, les moyens 6 sont adaptés pour que, une fois une électrode 3 ajustée autour de la première pièce 4 et une électrode 3 ajustée autour de la deuxième pièce 5, chaque fente 30 ait un espace e circonférentiel strictement inférieur à 1 mm.

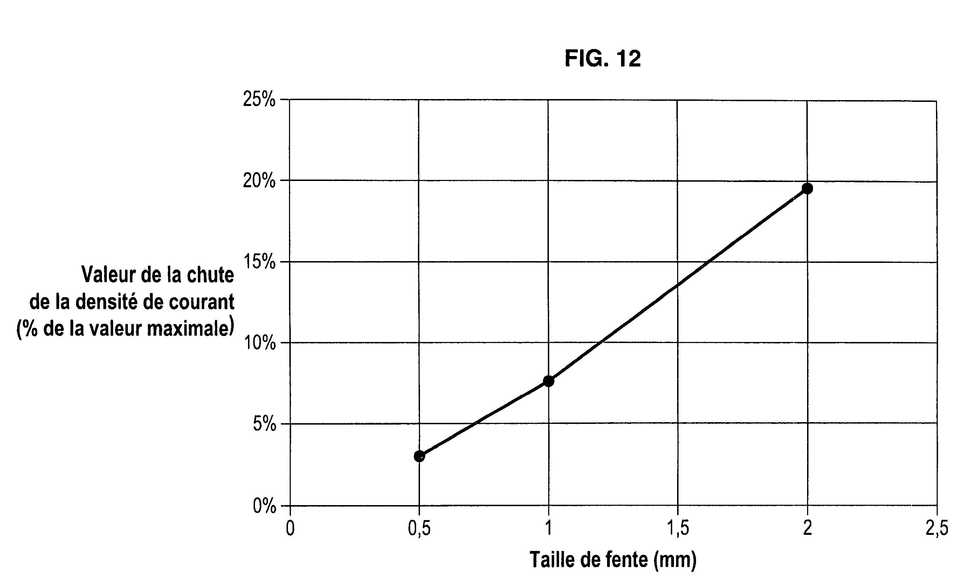

La modélisation précitée de la figure 10 permet de trouver la courbe de la figure 12, sur laquelle on constate que la valeur de la chute de densité de courant de soudage (A.mm⁻²) dans les pièces 4 et 5 varie sensiblement linéairement avec la largeur de la fente 30.

Pour améliorer l'homogénéité de la densité de courant, et ainsi la qualité de la soudure, chaque fente 30 a un espace e circonférentiel strictement inférieur à 1 mm, espace en dessous duquel on ne constate plus de défaut.

Avantageusement, chaque fente 30 a un espace circonférentiel e strictement inférieur à 0,5mm, préférentiellement strictement inférieur à 0,3mm.

## Revendications

1. Procédé de mise en place d'un dispositif (1) de soudage en phase solide par résistance, adapté pour souder une première pièce (4) à une deuxième pièce (5), le procédé comportant la mise en place de deux électrodes (3) cylindriques, adaptées chacune pour entourer une pièce (4, 5) à souder et permettre le passage d'un courant de soudure à travers la première pièce (4) et la deuxième pièce (5),
chacune des deux électrodes (3) comportant une fente (30) longitudinale définissant un espace (e) circonférentiel d'ajustage, permettant un ajustage par serrage de chacune des électrodes (3) autour d'une pièce (4, 5) à souder,
le procédé étant **caractérisé en ce qu'**il comporte le serrage de deux moyens (6) de serrage des électrodes (3) autour de la première pièce (4) et de la deuxième pièce (5), pour que, une fois une électrode (3) ajustée autour de la première pièce (4) et une électrode (3) ajustée autour de la deuxième pièce (5),
- chaque fente (30) est éloignée de 180° d'une autre fente (30) ; et
- chaque fente (30) ait un espace circonférentiel strictement inférieur à 1 mm.

2. Procédé de mise en place d'un dispositif (1) de soudage en phase solide par résistance, adapté pour souder une première pièce (4) à une deuxième pièce (5), le procédé comportant la mise en place de deux électrodes (3) cylindriques, adaptées chacune pour entourer une pièce (4, 5) à souder et permettre le passage d'un courant de soudure à travers la première pièce (4) et la deuxième pièce (5),
chacune des deux électrodes (3) comportant deux fentes (30) longitudinales, diamétralement opposées et définissant un espace (e) circonférentiel d'ajustage, permettant un ajustage par serrage de chacune des électrodes (3) autour d'une pièce (4, 5) à souder,
le procédé étant **caractérisé en ce qu'**il comporte le serrage de deux moyens (6) de serrage des électrodes (3) autour de la première pièce (4) et de la deuxième pièce (5), pour que, une fois une électrode (3) ajustée autour de la première pièce (4) et une électrode (3) ajustée autour de la deuxième pièce (5),
- chaque fente (30) est éloignée de 90° d'une autre fente (30) ; et
- chaque fente (30) ait un espace circonférentiel strictement inférieur à 1 mm.

3. Procédé selon l'une des revendications 1 à 2, dans lequel, une fois une électrode (3) ajustée autour de la première pièce (4) et une électrode (3) ajustée autour de la deuxième pièce (5), chaque fente (3) a un espace circonférentiel strictement inférieur à 0,5mm, préférentiellement strictement inférieur à 0,3mm.

## Patentansprüche

1. Verfahren zum Einsetzen einer Schweißvorrichtung (1) in der festen Phase per Widerstand, das geeignet ist, um ein erstes Teil (4) an einem zweiten Teil (5) zu verschweißen, wobei das Verfahren das Einsetzen von zwei zylindrischen Elektroden (3) umfasst, die jeweils geeignet sind, um ein zu verschweißendes Teil (4, 5) zu umgeben und den Durchgang eines Schweißstroms durch das erste Teil (4) und das zweite Teil (5) zu erlauben,
wobei jede der zwei Elektroden (3) einen Längsschlitz (30) umfasst, der einen Umfangsraum (e) zur Einstellung definiert, welche eine Einstellung jeder Elektrode (3) um ein zu verschweißendes Teil (4, 5) per Einstellung zulässt,
wobei das Verfahren **dadurch gekennzeichnet ist, dass** es das Einspannen von zwei Einspannmitteln (3) der Elektroden (3) um das erste Teil (4) und das zweite Teil (5) umfasst, damit, nachdem eine Elektrode (4) um das erste Teil (4) eingestellt ist und eine Elektrode (3) um das zweite Teil (5) eingestellt ist,
- jeder Schlitz (30) um 180° von einem anderen Schlitz (30) entfernt ist; und
- jeder Schlitz (30) einen Umfangsraum von strikt weniger als 1 mm hat.

2. Verfahren zum Einsetzen einer Schweißvorrichtung (1) in der festen Phase per Widerstand, das geeignet ist, um ein erstes Teil (4) an einem zweiten Teil (5) zu verschweißen, wobei das Verfahren das Einsetzen von zwei zylindrischen Elektroden (3) umfasst, die jeweils geeignet sind, um ein zu verschweißendes Teil (4, 5) zu umgeben und den Durchgang eines Schweißstroms durch das erste Teil (4) und das zweite Teil (5) zu erlauben,
wobei jede der zwei Elektroden (3) zwei Längsschlitze (30) umfasst, die diametral entgegengesetzt sind und einen Umfangsraum zur Einstellung definieren, der eine Einstellung per Einspannen jeder Elektrode (3) um ein zu verschweißendes Teil (4, 5) zulässt,
wobei das Verfahren **dadurch gekennzeichnet ist, dass** es das Einspannen von zwei Einspannmitteln (6) der Elektroden (3) um das erste Teil (4) und das zweite Teil (5) umfasst, damit, nachdm eine Elektrode (3) um das erste Teil (4) eingestellt ist und eine Elektrode (3) um das zweite Teil (5) eingestellt ist,
- jeder Schlitz (30) um 90° eines anderen Schlitzes (30) entfernt ist; und
- jeder Schlitz (30) einen Umfangsraum von strikt weniger als 1 mm hat.

3. Verfahren gemäß Anspruch 1 bis 2, bei dem, nachdem eine Elektrode (3) um das erste Teile (4) eingestellt ist und eine Elektrode (3) um das zweite Teil (5) eingestellt ist, jeder Schlitz (3) einen Umfangsraum von strikt weniger als 0,5 mm, bevorzugt von strikt weniger als 0,3 mm hat.

## Claims

1. Method for installing a solid-phase resistance welding device (1), adapted to weld a first part (4) to a second part (5), the method comprising the instalment of two cylindrical electrodes (3), each adapted to surround a part (4, 5) to be welded and to allow the passage of a welding current through the first part (4) and the second part (5),
each of the two electrodes (3) comprising a longitudinal slit (30) defining a circumferential adjustment space (e), allowing an adjustment by tightening of each of the electrodes (3) around a part (4, 5) to be welded,
the method being **characterized in that** it comprises the tightening of two means (6) for tightening the electrodes (3) around the first part (4) and the second part (5), so that, once an electrode (3) has been adjusted around the first part (4) and an electrode (3) adjusted around the second part (5),
- each slit (30) is 180° away from another slit (30); and
- each slit (30) has a circumferential space strictly less than 1mm.

2. Method for installing a solid-phase resistance welding device (1), adapted to weld a first part (4) to a second part (5), the method comprising the instalment of two cylindrical electrodes (3), each adapted to surround a part (4, 5) to be welded and to allow the passage of a welding current through the first part (4) and the second part (5),
each of the two electrodes (3) comprising two longitudinal slits (30), diametrically opposite and defining a circumferential adjustment space (e), allowing an adjustment by tightening of each of the electrodes (3) around a part (4, 5) to be welded,
the method being **characterized in that** it comprises the tightening of two means (6) for tightening the electrodes (3) around the first part (4) and the second part (5), so that, once an electrode (3) has been adjusted around the first part (4) and an electrode (3) adjusted around the second part (5),
- each slit (30) is 90° away from another slit (30); and
- each slit (30) has a circumferential space strictly less than 1mm.

3. Method according to one of claims 1 and 2, in which, once an electrode (3) has been adjusted around the first part (4) and an electrode (3) adjusted around the second part (5), each slit (3) has a circumferential space strictly less than 0.5mm, preferentially strictly less than 0.3mm.
